# EUROPÄISCHE PATENTSCHRIFT

(11) **EP 2 924 354 B1**
(45) Veröffentlichungstag und Bekanntmachung des Hinweises auf die Patenterteilung: **30.11.2016**
(21) Anmeldenummer: 15157563.6
(22) Anmeldetag: 04.03.2015
(51) Int. Cl.: F21V 23/00, F21Y 115/10, G02B 6/00

(54) **SENSORGESTEUERTE LEUCHTENVORRICHTUNG SOWIE LEUCHTENVORRICHTUNGSSYSTEM**
SENSOR-CONTROLLED LIGHT DEVICE AND LIGHT DEVICE SYSTEM
DISPOSITIF D'ÉCLAIRAGE COMMANDÉ PAR CAPTEUR ET SYSTÈME DE DISPOSITIF D'ÉCLAIRAGE

(30) Priorität: 26.03.2014 DE 102014104189
(43) Veröffentlichungstag der Anmeldung: 30.09.2015
(73) Patentinhaber: STEINEL GmbH, 33442 Herzebrock (DE)
(72) Erfinder: Möller, Thomas, 32049 Herford (DE); Eisele, Thomas, Dr., 52159 Roetgen (DE)
(74) Vertreter: Behrmann, Niels

(56) Entgegenhaltungen:
- WO-A1-2009/072740
- DE-A1-102010 000 195
- JP-A- 2004 164 893
- JP-A- 2004 170 698
- US-A1- 2002 141 181
- US-A1- 2008 037 284

## Beschreibung

Die vorliegende Erfindung betrifft eine sensorgesteuerte Leuchtenvorrichtung gemäß dem Oberbegriff des Anspruchs 1. Eine solche Vorrichtung ist aus der WO 2009/072740 A1, ferner aus der JP 2004 164893 bekannt. Ferner betrifft die Erfindung ein Leuchtenvorrichtungssystem.

Gattungsgemäße Leuchtenvorrichtungen mit einer über einen Sensor angesteuerten Leuchteinheit sind allgemein bekannt. Eine derartige gattungsgemäße sensorgesteuerte Leuchtenvorrichtung umfasst ein Leuchtengehäuse mit einer darin aufgenommenen Leuchteinheit, die in einem aktivierten Betriebszustand Licht abstrahlt und in einem deaktivierten Betriebszustand kein Licht abstrahlt. Bei der gattungsgemäßen Leuchtenvorrichtung ist die Leuchteinheit durch eine an dem Leuchtengehäuse angebrachte lichtdurchlässige Abschirmung geschützt. Diese lichtdurchlässige Abschirmung ist ausgebildet zum Empfangen des von der Leuchteinheit abgestrahlten Lichtes, Weiterleiten des empfangenen Lichtes innerhalb der Abschirmung (bzw. einer Leuchtflächeneinrichtung) und Abstrahlen des weitergeleiteten Lichtes von einer Lichtaustrittsfläche der Abschirmung (bzw. der Leuchtflächeneinrichtung). Die gattungsgemäße Leuchtenvorrichtung umfasst ferner einen Sensor zum Erfassen einer Bewegung und/oder einer Anwesenheit eines Objektes, beispielsweise einer Person, in einem Erfassungsbereich des Sensors außerhalb der Leuchtenvorrichtung. Mittels einer zu der Leuchtenvorrichtung zugehörigen Steuerungseinrichtung kann zwischen dem aktivierten und dem deaktivierten Betriebszustand der Leuchteinheit in Abhängigkeit einer von dem Sensor erfassten Bewegung und/oder Anwesenheit eines Objektes in dem Erfassungsbereich hin- und her geschaltet werden, oder der Betriebszustand kann anderweitig beeinflusst werden.

Damit die die gattungsgemäße Leuchtenvorrichtung kompakt und als eine mit dem Sensor integrierte Einheit hergestellt, vertrieben und am Einsatzort montiert werden kann, ist der Sensor, evtl. ergänzt durch eine zusätzliche Linsenanordnung, benachbart zu der Leuchteinheit in oder an der Leuchtenvorrichtung angebracht. Im aktivierten Betriebszustand der Leuchteinheit, also wenn die Leuchtenvorrichtung Licht abstrahlt, wird der Sensor aufgrund seiner räumlichen Nähe zu der Leuchteinheit von dieser auf seiner zu der Leuchteinheit benachbarten Seite mit Licht bestrahlt. Da der Sensor nicht vollständig lichtdurchlässig ist, wird dadurch eine Abschattung auf der von der Leuchteinheit abgewandten Seite des Sensors bewirkt. Aufgrund dieser durch den im Abstrahlungsbereich der Leuchteinheit angeordneten Sensor kann die gattungsgemäße Leuchtenvorrichtung Licht nur mit einer ungleichmäßigen Helligkeitsverteilung abstrahlen.

Erschwerend kommt hinzu, dass die von dem Sensor bewirkte Abschattung und die damit einhergehende Ungleichmäßigkeit der Helligkeitsverteilung des von der Leuchtenvorrichtung abgestrahlten Lichtes von dem verwendeten Sensor und dessen Position relativ zu der Leuchteinheit abhängt. Daher kann die Abschattung beim Entwurf der gattungsgemäßen Leuchtenvorrichtung kaum berücksichtigt oder kompensiert werden.

Da der Sensor im aktivierten Betriebszustand der Leuchteinheit zumindest teilweise von der Leuchteinheit mit Licht bestrahlt wird, kann der Sensor bzw. der Gehäuseabschnitt der Leuchtenvorrichtung, in dem der Sensor aufgenommen ist, dann besonders leicht von einer Person erkannt werden. Aufgrund dessen kann die Sensorfunktionalität der gattungsgemäßen Leuchtenvorrichtung besonders leicht manipuliert werden.

Außerdem beeinträchtigt der sichtbar an dem Leuchtengehäuse montierte Sensor das ästhetische Erscheinungsbild der gattungsgemäßen Leuchtenvorrichtung im deaktivierten Betriebszustand der Leuchteinheit. Im aktivierten Betriebszustand der Leuchteinheit wird insbesondere die ästhetische Anmutung der von der Leuchtenvorrichtung erzeugten Beleuchtung durch die von dem Sensor bewirkte Abschattung des von der Leuchteinheit abgestrahlten Lichtes gestört.

Aus dem oberbegrifflichen Stand der Technik gemäß WO 2009/072740 A1 ist es bereits bekannt, eine Leuchtflächeneinrichtung einer solchen Leuchte so auszubilden, dass die Lichtaustrittsfläche in dem aktivierten Betriebszustand der Leuchteinheit eine gleichmäßige Helligkeitsverteilung aufweist.

Die Aufgabe der vorliegenden Erfindung besteht daher in der Bereitstellung einer sensorgesteuerten Leuchtenvorrichtung, die, obwohl sie mit einem Sensor zum Erfassen einer Bewegung und/oder einer Anwesenheit eines Objektes in einem außerhalb des Leuchtengehäuses errichteten Erfassungsbereich versehen ist, Licht ohne eine durch den Sensor bedingte Abschattung abstrahlt. Dabei soll, zum Erreichen einer gleichmäßigen bzw. homogenen Struktur für einen Betrachter auch in dem deaktivierten Betriebszustand erreicht werden, dass der Hochfrequenz-Radarsensor für einen Betrachter nicht sichtbar ist.

Die Aufgabe der vorliegenden Erfindung wird durch eine gattungsgemäße sensorgesteuerte Leuchtenvorrichtung mit den kennzeichnenden Merkmalen des unabhängigen Anspruchs 1 gelöst. Zusätzliche Merkmale weiterer vorteilhafter Ausführungsformen ergeben sich aus den abhängigen Ansprüchen. Die Aufgabe wird auch durch ein Leuchtenvorrichtungssystem mit den Merkmalen gemäß Anspruch 10 gelöst.

Die erfindungsgemäße Leuchtenvorrichtung ist mit einem Leuchtengehäuse versehen, in dem eine Leuchteinheit aufgenommen ist, die einerseits in einem aktivierten Betriebszustand Licht abstrahlt und andererseits in einem deaktivierten Betriebszustand kein Licht abstrahlt. Eine von dem Leuchtengehäuse der Leuchtenvorrichtung aufgenommene Leuchtflächeneinrichtung ist ausgebildet zum Empfangen eines von der Leuchteinheit abgestrahlten Lichtes, Weiterleiten eines empfangenen Lichtes innerhalb der Leuchtflächeneinrichtung und Abstrahlen eines in der Leuchtflächeneinrichtung weitergeleiteten Lichtes von bzw. aus einer Lichtaustrittsfläche der Leuchtenflächeneinrichtung.

Die Leuchtenvorrichtung umfasst erfindungsgemäß einen Sensor zum Erfassen einer Bewegung und/oder einer Anwesenheit eines Objektes, beispielsweise eine Person, in einem Erfassungsbereich des Sensors außerhalb des Leuchtengehäuses. Der Erfassungsbereich des Sensors überlappt zumindest teilweise mit dem räumlichen Bereich, der von der Leuchtenvorrichtung mit Licht bestrahlbar bzw. beleuchtbar ist.

Ferner umfasst die erfindungsgemäße Leuchtenvorrichtung eine Steuerungseinrichtung zum Beeinflussen des Betriebszustandes der Leuchteinheit in Abhängigkeit einer von dem Sensor erfassten Bewegung und/oder Anwesenheit eines Objektes in dem Erfassungsbereich, wobei der Sensor einem jeweiligen Erfassungsergebnis entsprechende Signale an die Steuerungsrichtung überträgt, und die Steuerungseinrichtung daraufhin die Signale auswertet.

Erfindungsgemäß ist die Leuchtflächeneinrichtung ferner ausgebildet zum Empfangen des von der Leuchteinheit abgestrahlten Lichtes auf mindestens einer randseitigen Fläche der Leuchtflächeneinrichtung, also zum Einkoppeln des von der Leuchteinheit auf die mindestens eine randseitige Fläche der Leuchtflächeneinrichtung abgestrahlten Lichtes in die Leuchtflächeneinrichtung. Der Begriff der randseitigen Fläche bezeichnet dabei eine der Teilflächen, die die Lichtaustrittsfläche umfangsartig begrenzen bzw. zu dieser benachbart sind. Eine randseitige Fläche ist mit anderen Worten ein Abschnitt der Umfangsflächen bzw. der Flächen in Umfangsrichtung, die die Lichtaustrittsfläche begrenzen. Wenn die Leuchtflächeneinrichtung blattartig oder plattenförmig ausgebildet ist, also als ein Körper mit einer großflächigen Vorderseite und einer großflächigen Rückseite, die mit nahezu linienartig ausgebildeten vier Seitenflächen den Körper aufspannen, dann bezeichnet der Begriff der Lichtaustrittsfläche die Vorderseite des Körpers, und bezeichnet der Begriff der randseitigen Fläche der Leuchtflächeneinrichtung eine der vier Seitenflächen. Eine blattartig oder plattenförmig ausgebildete Leuchtflächeneinrichtung kann eine ebene oder gekrümmte Vorderseite aufweisen. Diese Rückseite und die Lichtaustrittsfläche sind auf zueinander entgegengesetzten Seiten der Leuchtflächeneinrichtung angeordnet, und zwischen diesen sind die randseitigen Flächen der Leuchtflächeneinrichtung angeordnet. Die Formulierung bezüglich der mindestens einen randseitigen Fläche der Leuchtflächeneinrichtung meint eine oder mehrere randseitige Flächen der Leuchtflächeneinrichtung, und andere Flächen der Leuchtflächeneinrichtung, also die Lichtaustrittsfläche und eine später erwähnte Rückseite der Leuchtflächeneinrichtung, werden von dieser Formulierung nicht erfasst.

Erfindungsgemäß ist der Sensor ferner als Hochfrequenz-Radarsensor ausgebildet und ist in dem Leuchtengehäuse, wenn die Lichtaustrittsfläche die Vorderseite der Leuchtflächeneinrichtung darstellt, auf einer der Rückseite der Leuchtflächeneinrichtung zugewandten Seite, also auf einer zu der Lichtaustrittsfläche der Leuchtflächeneinrichtung entgegengesetzten, rückseitigen Seite, angeordnet. Zur Erfassung von Bewegungen von Objekten in dem Erfassungsbereich des Hochfrequenz-Radarsensors ist dieser bevorzugt als Doppler-Radarsensor ausgebildet, der die durch die Bewegung des Objektes verursachte Frequenzdifferenz zwischen dem ausgesendeten Spektrum und dem empfangenen Spektrum, die von dem Hochfrequenz-Radarsensor gesendet bzw. empfangen werden, erfassen und auswerten kann. Ergänzend oder alternativ kann eine Anwesenheit eines Objektes in dem Erfassungsbereich des Hochfrequenz-Radarsensors bevorzugt durch einen, ein Zeittor bildenden Hochfrequenz-Radarsensor erfasst werden, der eine Anwesenheit eines Objektes in einem bestimmten, einem jeweiligen Zeittor zugeordneten, Entfernungsbereich erfasst, wenn ein von dem Sensor ausgesendetes Radarspektrum in dem, dem Entfernungsbereich zugeordneten Zeittor bzw. Signallaufzeitfenster von dem Sensor erfasst wird.

Ferner ist erfindungsgemäß die Leuchtflächeneinrichtung so ausgebildet, dass die Lichtaustrittsfläche in dem aktivierten Betriebszustand der Leuchteinheit eine gleichmäßige Helligkeitsverteilung aufweist. Dies bedeutet, dass, bezogen auf einen mittleren Helligkeitswert der Lichtaustrittsfläche, eine Helligkeit an einer Position auf der Lichtaustrittsfläche von dem mittleren Helligkeitswert höchstens um ± 10%, insbesondere ± 5%, abweicht.

Durch die seitliche Einkopplung bzw. Lichteinspeisung, also die Einkopplung auf mindestens einer randseitigen Fläche der Leuchtflächeneinrichtung, und die Anordnung eines Hochfrequenz-Radarsensors auf der der Rückseite der Leuchtflächeneinrichtung zugewandten Seite, kann mit der erfindungsgemäßen Leuchtenvorrichtung das aus dem Stand der Technik bekannte Problem der durch die Anordnung des Sensors bedingten Abschattung vermieden werden. Neben der Vermeidung der Abschattung ermöglicht die erfindungsgemäße Leuchtenvorrichtung außerdem, dass die Lichtaustrittsfläche, aus der das in der Leuchtenvorrichtung erzeugte Licht abgestrahlt wird, eine gleichmäßige Helligkeitsverteilung aufweist, ohne dass der Hochfrequenz-Radarsensor für einen Betrachter außerhalb der Leuchtenvorrichtung sichtbar ist.

Gemäß einer weiteren erfindungsgemäßen Ausführungsform ist die Leuchtflächeneinrichtung als eine optische Streuungseinrichtung ausgebildet, um das in der Leuchtflächeneinrichtung weitergeleitete Licht von der Lichtaustrittsfläche diffus abzustrahlen.

Dies ermöglicht eine noch gleichmäßigere Helligkeitsverteilung auf der Lichtaustrittsfläche der Leuchtenvorrichtung. Ferner wird noch besser vermieden, dass der Hochfrequenz-Radarsensor im aktivierten Betriebszustand der Leuchteneinheit für einen sich außerhalb der Leuchtenvorrichtung befindenden Betrachter sichtbar ist.

Gemäß der Erfindung weist die Lichtaustrittsfläche eine vordefinierte und optisch wirksame Bemusterung auf, um eine Streuung eines in der Leuchtflächeneinrichtung weitergeleiteten Lichtes und den Austritt dieses Lichtes aus der Lichtaustrittsfläche zu bewirken. Die Bemusterung ist bevorzugt als eine Rasterpunktform ausgebildet. Der Begriff der Rasterpunktform bezeichnet hierbei eine Ausbildung der Bemusterung, die durch punktartige Flächen, Ellipsenflächen, Kreisflächen, Rechteckflächen oder eine Kombination gebildet ist, wobei die Größen dieser Flächen und die Abstände zwischen diesen Flächen variieren.

Die Bemusterung kann auf der Lichtaustrittsfläche hergestellt werden durch eine Bedruckung, Aufklebung, Lackierung, Ätzung, Gravierung, Sandstrahlung oder eine beliebige Kombination davon.

In einer bevorzugten erfindungsgemäßen Ausführungsform ist die Bemusterung durch Rasterpunkte mit gleichem Abstand zueinander und variabler Punktgröße bzw. Flächen ausgebildet, wobei diese Rasterpunktform auch als amplitudenmoduliertes Raster bezeichnet wird.

Die Lichtaustrittsfläche mit der optisch wirksamen Bemusterung ermöglicht eine sehr gleichmäßige Helligkeitsverteilung auf der Lichtaustrittsfläche und eine sehr gute Streuung des Lichtes von der Lichtaustrittsfläche.

Gemäß einer erfindungsgemäßen Fortbildung der zuvor erwähnten erfindungsgemäßen Ausführungsform ist ein Flächendeckungsgrad optisch wirksamer Musterelemente der Bemusterung variabel und nimmt bevorzugt mit einem zunehmenden Abstand zu der Leuchteinheit, bevorzugt stetig, also ohne Sprünge, zu. Der Flächendeckungsgrad bezeichnet dabei, bezogen auf einen bestimmten Flächenabschnitt einer vorgegebenen Größe als eine Referenzfläche auf der Lichtaustrittsfläche, das Verhältnis der mit den optisch wirksamen Musterelementen bedeckten Flächenabschnitte der Referenzfläche zu der Gesamtgröße der Referenzfläche. Mit dem Abstand zu der Leuchteinheit ist die kürzeste Entfernung von der Referenzfläche zu der Leuchteneinheit gemeint. Wenn die Leuchteinheit sich geradenartig erstreckt, wird der Abstand als Lot (Senkrechte zur Leuchteinheit) gemessen, das durch einen vorgegeben Punkt auf der Referenzfläche verläuft. Der Begriff stetig bezeichnet dabei eine nicht-stufenartige und nicht-sprungartige Veränderung.

Der variable Flächendeckungsgrad der optisch wirksamen Musterelemente der Bemusterung ermöglicht eine besonders gleichmäßige Helligkeitsverteilung auf der Lichtaustrittsfläche, da das Abstrahlen des in der Leuchtflächeneinrichtung weitergeleiteten Lichtes von der Lichtaustrittsfläche gezielt in Abhängigkeit von dem Abstand zu der Leuchteinheit, und somit in Abhängigkeit von der durch das Licht in der Leuchtflächeneinrichtung zurückgelegten Strecke, beeinflusst werden kann. Die stetige Zunahme des Flächendeckungsgrades mit dem zunehmenden Abstand zu der Leuchteneinheit ermöglicht eine überaus gleichmäßige Helligkeitsverteilung auf der Lichtaustrittsfläche.

Gemäß der Erfindung ist auf einer zu der Lichtaustrittsfläche rückseitigen Fläche, also der Rückseite, der Leuchtflächeneinrichtung und/oder zwischen dem Hochfrequenz-Radarsensor und der rückseitigen Fläche der Leuchtflächeneinrichtung eine Farbschichtanordnung mit einer einheitlich ausgeprägten Farbe angeordnet, die identisch ist zu einer Farbe der optisch wirksamen Musterelemente der Bemusterung. Die Farbschichtanordnung ist lichtundurchlässig aber für ein Wirkungsspektrum, also für ein Sende- und Empfangsspektrum, des Hochfrequenz-Radarsensors durchlässig. Die Lichtaustrittsfläche mit der Bemusterung ist so ausgestaltet, dass in dem deaktivierten Betriebszustand der Leuchteinheit für einen Betrachter, der mit einem Mindestabstand von bevorzugt mindestens 0,5 Metern von der Lichtaustrittsöffnung beabstandet ist, die optisch wirksamen Musterelemente der Bemusterung nicht erkennbar sind. Die Farbe der Farbschichtanordnung und die Farbe der optisch wirksamen Musterelemente der Bemusterung sind dabei bevorzugt beide weiß. Der Begriff der einheitlich ausgeprägten Farbe verweist darauf, dass ein Betrachter mit bloßem Auge keine Farbunterschiede auf der Farbschichtanordnung wahrnehmen kann. Mit den zueinander identischen Farben der Farbschichtanordnung bzw. der Musterelemente ist gemeint, dass ein Betrachter bei normaler Betrachtung mit bloßem Auge keinen Farbunterschied zwischen diesen Farben feststellen kann.

Dadurch wird einerseits eine gleichmäßige Helligkeitsverteilung auf der Lichtaustrittsfläche der Leuchtflächeneinrichtung in dem aktivierten Betriebszustand der Leuchteinheiten erreicht. Darüber hinaus wird erreicht, dass die Lichtaustrittsfläche auch in dem deaktivierten Betriebszustand der Leuchteinheit eine gleichmäßige bzw. homogene Struktur für einen Betrachter aufweist. Außerdem ermöglicht diese erfindungsgemäße Ausführungsform besonders wirkungsvoll, dass der Hochfrequenz-Radarsensor in dem deaktivierten Betriebszustand der Leuchteinheit für einen Betrachter nicht sichtbar ist.

In einer weiteren erfindungsgemäßen Ausführungsform weist die Leuchtflächeneinrichtung in ihrem Inneren eine Anordnung optisch wirksamer Störstellen auf. Diese Störstellen können eine Zerstreuung des in der Leuchtflächeneinrichtung weitergeleiteten Lichtes im Sinne eines Diffusors und/oder ein Umlenken eines weitergeleiteten Lichtes im Sinne eines Preismas bewirken.

Die optisch wirksamen Störstellen können in die Leuchtflächeneinrichtung eingebracht worden sein, indem die Leuchtflächeneinrichtung an vordefinierten Positionen gezielt erhitzt wurde, beispielsweise mit einem Laser, so dass dadurch eine Veränderung der optischen Eigenschaften des Materials der Leuchtflächeneinrichtung an dieser Position bewirkt wird.

Dadurch wird eine sehr gute Streuung des in der Leuchtflächeneinrichtung weitergeleiteten Lichtes und somit eine gleichmäßige Helligkeitsverteilung des aus der Lichtaustrittsfläche der Leuchtflächeneinrichtung austretenden Lichtes erreicht.

Gemäß einer weiteren erfindungsgemäßen Ausführungsform ist auf einer zu der Lichtaustrittsfläche rückseitigen Fläche der Leuchtflächeneinrichtung und bevorzugt auf mindestens den randseitigen Flächen der Leuchtflächeneinrichtung ohne eine benachbart dazu angeordnete Leuchteinheit eine Reflektionsanordnung so aufgebracht, dass ein in der Lichtflächeneinrichtung empfangenes und weitergeleitetes Licht nicht aus diesen Flächen der Leuchtflächeneinrichtung austritt, wobei die Reflektionsanordnung für ein Wirkungsspektrum des Hochfrequenz-Radarsensors durchlässig ist. Die Reflektionsschicht ist bevorzugt als eine Folie ausgebildet und auf die Leuchtflächeneinrichtung aufgebracht. Besonders bevorzugt sind außer der Lichtaustrittsfläche alle anderen Flächen der Lichtflächeneinrichtung mit der Reflektionsanordnung versehen bzw. von dieser umschlossen. Dabei sind Abschnitte der Reflektionsanordnung; die auf randseitigen Flächen der Lichtflächeneinrichtung mit einer benachbart bzw. gegenüberstehend dazu angeordneten Leuchteinheit aufgebracht sind, so ausgebildet, dass das von der Leuchteinheit abgestrahlte Licht durch die Reflektionsanordnung in die Lichtflächeneinrichtung eingekoppelt werden kann, aber nicht von der Lichtflächeneinrichtung durch die Reflektionsanordnung austreten kann. Eine derartige, besonders bevorzugte Reflektionsanordnung kann als semipermeable Folie oder als eine Folie mit Durchgangslöchern für die Einkopplung des von der Leuchteinheit abgestrahlten Lichtes in die randseitige(n) Fläche(n) der Leuchtflächeneinrichtung ausgebildet sein.

Die auf der Lichtflächeneinrichtung angeordnete Reflektionsanordnung ermöglicht eine Verbesserung des Wirkungsgrades der Leuchtenvorrichtung, da ein unerwünschter Lichtaustritt verhindert werden kann und die Leuchteinheit mit kleinerer Leistung vorgesehen werden kann.

Besonders bevorzugt sind die zuvor erwähnte Farbschichtanordnung und die Reflektionsanordnung kombiniert auf der Lichtflächeneinheit aufgebracht und als eine einzige, weiße Folie ausgebildet.

Zur Erfassung einer Umgebungshelligkeit, beispielsweise mit einem Fotodetektor, zum Erfassen eines Signals von einer drahtlosen Fernbedienung, beispielsweise mit einem Infrarotwiderstand, und zum Anzeigen eines Betriebszustands der Leuchtenvorrichtung, beispielsweise über eine aktivierbare Leuchtdiode, kann die Farbschichtanordnung und/oder die Reflektionsanordnung gemäß der vorliegenden Erfindung mit einem Durchgangsloch oder mehreren Durchgangslöchern versehen sein, sofern ein Betrachter ein derartiges Durchgangsloch bei einer Betrachtung der Leuchtenvorrichtung mit bloßem Auge aus einem Mindestabstand von 0,5 Metern nicht als Farbunterschied im Vergleich zur restlichen Farbgebung der Farbschichtanordnung und/oder der Reflektionsanordnung erkennt.

Bei einer weiteren erfindungsgemäßen Ausführungsform ist das Leuchtengehäuse, insbesondere ein für die Aufnahme der Leuchteinheit vorgesehener Abschnitt des Leuchtengehäuses, aus einem Metall hergestellt. Als Metall wird dabei Aluminium bevorzugt.

Dies ermöglicht eine gute Ableitung der von der Leuchteinheit in ihrem aktiven Betriebszustand erzeugten Wärmeenergie und verlängert somit die Lebensdauer der Leuchteinheit, des Sensors und der Steuerungseinrichtung der Leuchtenvorrichtung.

Gemäß einer weiteren erfindungsgemäßen Ausführungsform ist die Leuchteinheit durch Leuchtmittel ausgebildet, wobei die Leuchtmittel entlang mindestens einer randseitigen Fläche der Leuchtflächeneinrichtung angeordnet sind und ferner zueinander kettenartig angeordnet sind. Dabei sind die Leuchtmittel bevorzugt kettenartig zusammen auf einer LED-Leiterplatte (LED, Light Emitting Diode bzw. Leuchtdiode) angeordnet, die auch als Leuchtdioden-Leiterkarte oder LED-Platine bekannt ist. Pro randseitiger Fläche der Leuchtflächeneinrichtung sind bevorzugt 20 bis 40 Leuchtdioden mit einer jeweiligen Leistung von 20 bis 100 mW, bevorzugt 30 mW, pro Leuchtdiode vorgesehen. Die Leuchtmittel sind dabei besonders bevorzugt auf zwei zueinander gegenüberliegenden randseitigen Flächen der Leuchtflächeneinrichtung angeordnet. Für den Begriff der randseitigen Fläche der Leuchtflächeneinrichtung gilt dabei die bereits zuvor erwähnte Definition.

Dadurch kann eine besonders gleichmäßige Einkopplung des von der Leuchteinheit abgestrahlten Lichtes in die Leuchtflächeneinrichtung bewirkt werden. Durch die Anordnung der Leuchtmittel auf zwei zueinander gegenüberliegenden randseitigen Flächen der Leuchtflächeneinrichtung kann ein sehr guter Kompromiss zwischen einerseits einer gleichmäßigen Helligkeit auf der Lichtaustrittsfläche und andererseits der durch die Verlustleistung der Leuchtdioden bedingten Erwärmung der Leuchtenvorrichtung und den Herstellungskosten für die Leuchteinheit erreicht werden.

Bei einer weiteren erfindungsgemäßen Ausführungsform ist die Leuchtflächeneinrichtung aus Polycarbonat, Polymethylmethacrylat (auch bekannt als Plexiglas oder Acryl) oder Glas hergestellt und hat eine Materialdicke im Bereich von drei bis 7 mm, bevorzugt 4 bis 6 mm. Dabei hat die Leuchtflächeneinrichtung bevorzugt eine konstante Materialdicke und ist plattenförmig, also flach oder blattförmig, ausgebildet. Der Begriff Glas umfasst auch Milchglas, also satiniertes Glas.

Dadurch kann eine besonders gute Einkopplung des von der Leuchteinheit abgestrahlten Lichtes in die Leuchtflächeneinrichtung, eine sehr gute Weiterleitung des Lichtes in der Leuchtflächeneinrichtung und eine sehr gute Streuung mit gleichmäßiger Helligkeitsverteilung von/auf der Lichtaustrittsfläche erreicht werden.

Gemäß einer weiteren erfindungsgemäßen Ausführungsform weist die Leuchtenvorrichtung ferner Mittel für eine, von einer Umgebungshelligkeit der Leuchtenvorrichtung abhängige Aktivierung der Leuchteinheit auf, wobei diesen Mitteln insbesondere Kompensationsmittel zur Kompensation eines von der aktivierten Leuchteinheit erzeugten Umgebungshelligkeitsanteils zugeordnet sind.

Dadurch kann eine Aktivierung der Leuchteinheit der Leuchtenvorrichtung auch in Abhängigkeit von der Umgebungshelligkeit im Sinne eines Dämmerungsschalters gesteuert werden. Hierfür wird ein Fotowiderstand oder ein Fotodetektor verwendet.

Gemäß einer weiteren erfindungsgemäßen Ausführungsform ist die Leuchtenvorrichtung ausgebildet zur Parametrisierung, mittels einer drahtlos anbindbaren Fernbedienungsvorrichtung zur benutzergesteuerten Einstellung, mindestens eines Betriebsparameters der Leuchtenvorrichtung und/oder zur bevorzugt drahtlosen Übertragung mindestens eines Betriebsparameters der Leuchtenvorrichtung an eine benachbart vorgesehene oder vorzusehende weitere erfindungsgemäße Leuchtenvorrichtung. Ferner umfasst die Erfindung auch ein Leuchtenvorrichtungssystem mit mindestens einer Leuchtenvorrichtung gemäß einer der oben dargestellten erfindungsgemäßen Ausführungsformen und einer drahtlos anbindbaren Fernbedienungsvorrichtung zur benutzergesteuerten Einstellung mindestens eines Betriebsparameters der Leuchtenvorrichtung und/oder zum Veranlassen einer Übertragung des mindestens einen benutzereingestellten Betriebsparameters der Leuchtenvorrichtung an eine benachbart vorgesehene oder vorzusehende weitere erfindungsgemäße Leuchtenvorrichtung.

Die Erfindung umfasst auch ein Leuchtenvorrichtungssystem mit mindestens zwei der erfindungsgemäßen Leuchtenvorrichtungen oder mit dem zuvor erwähnten erfindungsgemäßen Leuchtenvorrichtungssystem und einerweiteren erfindungsgemäßen Leuchtenvorrichtung.

Weitere vorteilhafte erfindungsgemäße Ausführungsformen ergeben sich aus der Kombination von mindestens zwei der zuvor oder im Nachfolgenden aufgeführten erfindungsgemäßen Ausführungsformen, sofern eine derartige Kombination nicht offensichtlich widersinnig ist.

Gemäß einer Ausführungsform der Erfindung ist die Leuchtenvorrichtung als Flachleuchte mit einer ebenen und plattenförmigen Leuchtflächenvorrichtung derart ausgebildet, dass eine Bauhöhe der Leuchtenvorrichtung, gemessen in Richtung einer Senkrechten der Leuchtflächenvorrichtung, höchstens ein Fünftel der Breite bzw. Tiefe der Leuchtenvorrichtung, gemessen in den Richtungen, die die Ebene der plattenförmigen Leuchtflächenvorrichtung aufspannen, beträgt.

Im Folgenden werden beispielhaft Ausführungsformen der Erfindung anhand der beigefügten Figuren erläutert, in denen
- Fig. 1: eine schematische Explosionsansicht einer Leuchtenvorrichtung gemäß einer Ausführungsform der Erfindung zeigt;
- Fig. 2: eine Detailansicht der in Fig. 1 gezeigten Leuchtenvorrichtung gemäß der Ausführungsform der Erfindung zeigt;
- Fig. 3: eine Lichtaustrittsfläche mit einer Bemusterung gemäß einer Ausführungsform der Erfindung zeigt;
- Fig. 4: eine strukturelle Querschnittsansicht einer Leuchtenvorrichtung gemäß einer Ausführungsform der Erfindung zeigt.

in den Figuren bezeichnen dieselben Bezugszeichen dieselben oder ähnliche Komponenten.

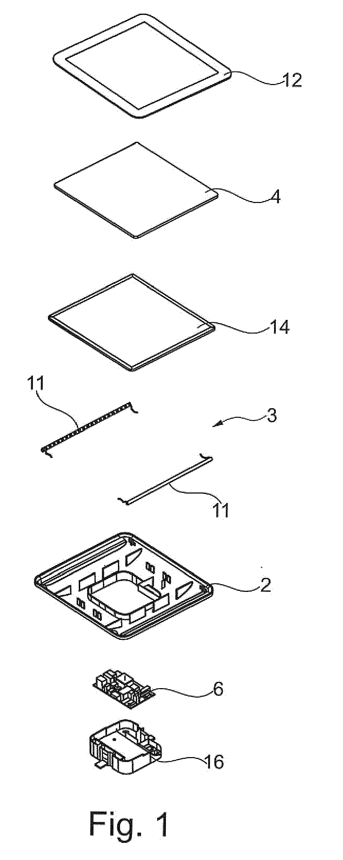

Fig. 1 ist eine schematische Explosionsansicht einer Leuchtenvorrichtung gemäß einer Ausführungsform der Erfindung. Die in Fig. 1 gezeigte erfindungsgemäße Leuchtenvorrichtung 1 umfasst ein Gehäuse 2 mit einem Rahmen 12. In dem Gehäuse 2 sind ein Hochfrequenz-Radarsensor 6 und ein Modul 16 mit einer darin untergebrachten Steuerungseinrichtung (nicht gezeigt) aufgenommen. Ferner umfasst die Leuchtenvorrichtung 1 eine Leuchteinheit 3 und eine Leuchtflächeneinrichtung 4. Die Leuchteinheit 3 ist durch zwei LED-Leiterplatten 11 ausgebildet, die mit einer Vielzahl von Leuchtdioden bestückt sind. Auf zwei zueinander gegenüberliegenden randseitigen Flächen der Leuchtflächeneinrichtung 4 ist jeweils eine der zwei LED-Leiterplatten 11 der Leuchteinheit 3 angeordnet. Die Leuchteinheit 3 ist elektrisch mit dem Modul 16 mit der Steuerungseinrichtung verbunden, und ein Betriebszustand der Leuchteinheit 3 wird durch die Steuerungseinrichtung in Abhängigkeit von von dem Hochfrequenz-Radarsensor 6 gelieferten Sensorsignalen gesteuert.

Ferner umfasst die in Fig. 1 gezeigte Leuchtenvorrichtung 1 eine plattenförmig ausgebildete Leuchtflächeneinrichtung 4, die einerseits in dem Gehäuse 2 aufgenommen ist, und andererseits auf einer Seite der Lichtaustrittsfläche 5 von dem Rahmen 12 zum Teil abgedeckt wird. Zwischen der Leuchtflächeneinrichtung 4 und dem Gehäuse 2 ist eine Reflektionsanordnung 14 angeordnet.

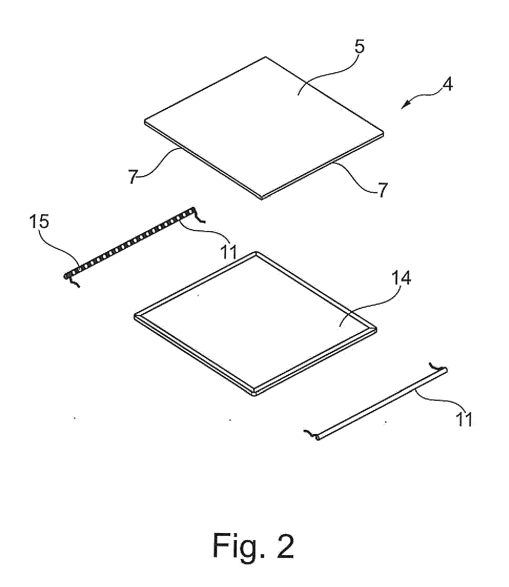

Fig. 2 zeigt eine Detailansicht der in Fig. 1 gezeigten Leuchtenvorrichtung. Die Leuchtflächeneinrichtung 4 ist plattenförmig ausgebildet, so dass die Lichtaustrittsfläche 5 eine ebene Fläche ist, die durch vier randseitige Flächen der Leuchtflächeneinrichtung 7 begrenzt wird, von denen in Fig. 2 zwei gezeigt sind. Auf der von der Lichtaustrittsfläche 5 abgewandten Seite der Leuchtflächeneinrichtung 4 ist die Reflektionsanordnung 14 angeordnet. Die Reflektionsanordnung 14 umschließt die von der Lichtaustrittsfläche 5 der Leuchtflächeneinrichtung 4 abgewandte Fläche und auch die vier randseitigen Flächen der Leuchtflächeneinrichtung 7, um zu verhindern, dass aus diesen fünf Flächenabschnitten Licht austreten kann. Wie zuvor erwähnt, wird dadurch der Wirkungsgrad der Leuchtenvorrichtung erhöht.

Auf zwei zueinander gegenüberliegenden randseitigen Flächen der Leuchtflächeneinrichtung 7 ist jeweils eine LED-Leiterplatte 11 parallel zu ihrer jeweiligen randseitigen Fläche der Leuchtflächeneinrichtung 7 angeordnet. Die LED-Leiterplatten 11 der Leuchteinheit 3 umfassen einander kettenartig angeordnete Leuchtdioden (LED, Light Emitting Diode), die in Fig. 2 symbolisch durch weiße Ausnehmungen in einer der gezeigten LED-Leiterplatten 7 veranschaulicht sind.

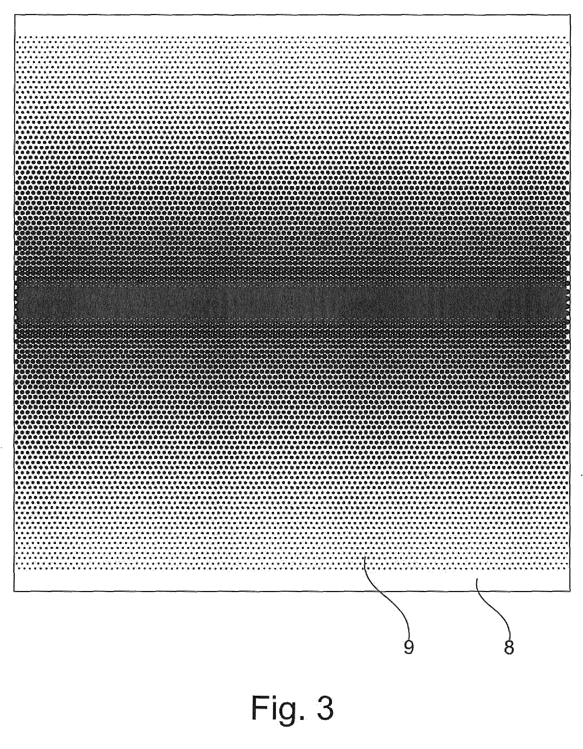

Fig. 3 zeigt eine auf der Lichtaustrittsfläche 5 der Leuchtflächeneinrichtung 4 vorgesehene Bemusterung 8 mit Musterelementen 9. Die in Fig. 3 schwarz gedruckten Musterelemente 9 sind auf einer Leuchtenvorrichtung gemäß einer Ausführungsform der Erfindung bevorzugt in weißer Farbe, bevorzugt als Beklebung, aufgebracht. Die Musterelemente 9 sind durch gleichmäßig beabstandete sich flächenartig erstreckende Punkte bzw. Kreisflächen verkörpert. Der Durchmesser dieser Kreisflächen, und somit der Flächendeckungsgrad der Bemusterung, nimmt mit dem Abstand von der randseitigen Fläche, auf der eine Leuchteinheit 3 bzw. eine LED-Leiterplatte 11 vorgesehen ist, stetig zu, so dass schließlich die Kreisflächen bzw. die Musterelemente 9 in einem Bereich um die Mittellinie zwischen den zwei LED-Leiterplatten 11 der Lichtaustrittsfläche 5 vollständig überlappen. Für die in Fig. 3 gezeigte Bemusterung ist eine LED-Leiterplatte 11 der Leuchteinheit 3 oberhalb der gezeigten Bemusterung 8 vorgesehen, und die andere LED-Leiterplatte 11 der Leuchteinheit 3 ist unterhalb der Bemusterung 8 vorgesehen.

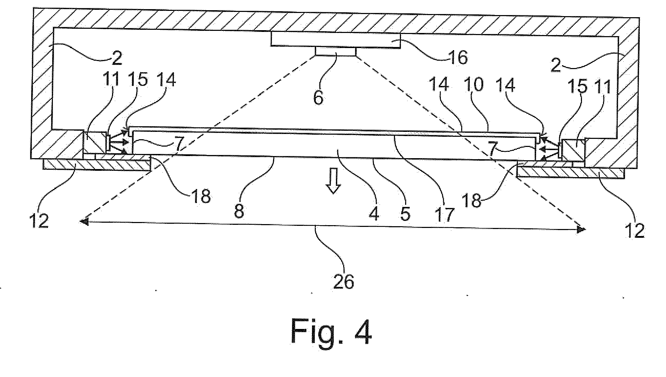

Fig. 4 zeigt eine strukturelle und nicht maßstabsgetreue Querschnittsansicht einer Leuchtenvorrichtung gemäß einer Ausführungsform der Erfindung. Seitlich zu der aus durchsichtigem Polycarbonat hergestellten, durchsichtigen und plattenförmig ausgebildeten Leuchtflächeneinrichtung 4, nämlich benachbart zu zwei zueinander gegenüberliegenden randseitigen Flächen der Leuchtflächeneinrichtung 7, ist jeweils eine LED-Leiterplatte 11 mit Leuchtdioden 15 angeordnet. Die Leuchtdioden 15 sind als auf der LED-Leiterplatte angeordnete SMD-Leuchtdioden mit untereinander gleicher Leistungsaufnahme ausgebildet (SMD: Surface Mounted Device). Die LED-Leiterplatten 11 mit den Leuchtdioden 15 sind so angeordnet, dass ein von den Leuchtdioden auf die randseitige Fläche der Leuchtflächeneinrichtung 7 abgestrahltes Licht in die Leuchtflächeneinrichtung 4 eingekoppelt wird. Dieses Licht tritt aus der Lichtaustrittsfläche 5 der Leuchtflächeneinrichtung 4 aus, wie durch den in Fig. 4 gezeigten, nach unten gerichteten Pfeil symbolisch veranschaulicht. Auf der Lichtaustrittsfläche 5 der Leuchtflächeneinrichtung 4 ist die Bemusterung 8 aufgebracht, die in Fig. 4 symbolisch vollständig flächig ausgebildet dargestellt ist.

Auf einer rückseitigen Fläche der Leuchtflächeneinrichtung 17 ist eine Reflektionsanordnung 14 aufgebracht. Eine Farbschichtanordnung 10 ist kombiniert bzw. integriert mit der Reflektionsanordnung 14 auf der rückseitigen Fläche der Leuchtflächeneinrichtung 17 aufgebracht.

Die in Fig. 4 gezeigten randseitigen Flächen der Leuchtflächeneinrichtung 7 sind abschnittsweise mit der Reflektionsanordnung 14 versehen, was in Fig. 4 symbolisch durch abgewinkelt dargestellte Endabschnitte der Reflektionsanordnung 14 veranschaulicht ist. Der Hochfrequenz-Radarsensor 6 ist auf der zu der Lichtaustrittsfläche 5 der Leuchtflächeneinrichtung 4 entgegengesetzten, rückseitigen Seite, also auf der Seite der rückseitigen Fläche der Leuchtflächeneinrichtung 17 angeordnet, und ein Erfassungsbereich 26 des Hochfrequenz-Radarsensors außerhalb des Leuchtengehäuses ist symbolisch in Fig. 4 veranschaulicht. Wie in Fig. 4 veranschaulicht, bedeckt der Rahmen 12 sich am Übergang zu den randseitigen Flächen 7 befindende Endabschnitte bzw. Randabschnitte der Leuchtaustrittsfläche 5 der Leuchtflächeneinrichtung 4. Ferner ist zwischen dem Rahmen 12 und den Endabschnitten ein Abdichtungselement 18 vorgesehen. Damit kann besonders wirkungsvoll verhindert werden, dass die Leuchtdioden durch die Leuchtflächeneinrichtung hindurch sichtbar sind, und es kann dadurch eine besonders gleichmäßige Helligkeitsverteilung auf der Lichtaustrittsfläche 5 erreicht werden.

Der Schutzbereich der vorliegenden Erfindung wird durch die beigefügten Ansprüche definiert.

### Bezugszeichenliste

- 1: Leuchtenvorrichtung
- 2: Leuchtengehäuse
- 3: Leuchteinheit
- 4: Leuchtflächeneinrichtung
- 5: Lichtaustrittsfläche
- 6: Hochfrequenz-Radarsensor
- 7: randseitige Fläche der Leuchtflächeneinrichtung
- 8: Bemusterung
- 9: Musterelement
- 10: Farbschichtanordnung
- 11: LED-Leiterplatte
- 12: Rahmen
- 14: Reflektionsanordnung
- 15: Leuchtdiode
- 16: Modul
- 17: rückseitige Fläche der Leuchtflächeneinrichtung
- 18: Abdichtungselement
- 26: Erfassungsbereich

## Patentansprüche

1. Sensorgesteuerte Leuchtenvorrichtung (1) mit
einem Leuchtengehäuse (2);
einer in dem Leuchtengehäuse (2) aufgenommenen Leuchteinheit (3), die in einem aktivierten Betriebszustand Licht abstrahlt und in einem deaktivierten Betriebszustand kein Licht abstrahlt;
einer von dem Leuchtengehäuse (2) aufgenommenen Leuchtflächeneinrichtung (4) zum Empfangen eines von der Leuchteinheit (3) abgestrahlten Lichtes, Weiterleiten eines empfangenen Lichtes in der Leuchtflächeneinrichtung und Abstrahlen eines weitergeleiteten Lichtes von einer Lichtaustrittsfläche (5) der Leuchtflächeneinrichtung;
einem Sensor (6) zum Erfassen einer Bewegung und/oder einer Anwesenheit eines Objektes in einem Erfassungsbereich (26) außerhalb des Leuchtengehäuses;
einer Steuerungseinrichtung (16) zum Beeinflussen des Betriebszustands der Leuchteinheit (3) in Abhängigkeit einer von dem Sensor (6) erfassten Bewegung und/oder Anwesenheit eines Objektes in dem Erfassungsbereich (26),
wobei die Leuchtflächeneinrichtung (4) ausgebildet ist zum Empfangen des von der Leuchteinheit (3) abgestrahlten Lichtes auf mindestens einer randseitigen Fläche der Leuchtflächeneinrichtung (7),
der Sensor als Hochfrequenz-Radarsensor (6) ausgebildet ist und in dem Leuchtengehäuse (2) auf einer zur der Lichtaustrittsfläche (5) der Leuchtflächeneinrichtung (4) entgegengesetzten, rückseitigen Seite angeordnet ist,
die Leuchtflächeneinrichtung (4) so ausgebildet ist, dass die Lichtaustrittsfläche (5) in dem aktivierten Betriebszustand der Leuchteinheit (3) eine gleichmäßige Helligkeitsverteilung aufweist,
**dadurch gekennzeichnet,**
**dass** die Lichtaustrittsfläche (5) eine vordefinierte, optisch wirksame Bemusterung (8) aufweist, um eine Streuung eines in der Leuchtflächeneinrichtung weitergeleiteten Lichtes und dessen Austritt aus der Lichtaustrittsfläche zu bewirken, und die, bevorzugt als Rasterpunktform ausgebildete, Bemusterung hergestellt ist durch mindestens eine Bedruckung, Aufklebung, Lackierung, Ätzung, Gravierung, Sandstrahlung oder eine Kombination davon,
wobei ein Flächendeckungsgrad optisch wirksamer Musterelemente (9) der Bemusterung (8) variabel ist und bevorzugt mit einem zunehmenden Abstand zu der Leuchteinheit, bevorzugt stetig, zunimmt und auf einer zu der Lichtsaustrittsfläche (5) rückseitigen Fläche der Leuchtflächeneinrichtung (17) und/oder zwischen dem Hochfrequenz-Radarsensor (6) und der rückseitigen Fläche der Leuchtflächeneinrichtung (17) eine Farbschichtanordnung (10), die lichtundurchlässig aber für ein Wirkungsspektrum des Hochfrequenz-Radarsensors durchlässig ist, mit einer einheitlich ausgeprägten, bevorzugt weißen, Farbe angeordnet ist, die identisch zu einer Farbe der optisch wirksamen Musterelemente (9) der Bemusterung (8) ist, und die Lichtaustrittsfläche (5) mit der Bemusterung (8) so ausgestaltet ist, dass in dem deaktivierten Betriebszustand der Leuchteinheit für einen, mit einem Mindestabstand, von bevorzugt mindestens 0,5 Meter, von der Lichtaustrittsfläche beabstandeten Betrachter die optisch wirksamen Musterelemente (9) der Bemusterung nicht erkennbar sind.

2. Leuchtenvorrichtung nach Anspruch 1, **dadurch gekennzeichnet, dass** die Leuchtflächeneinrichtung (4) als optische Streuungseinrichtung für ein diffuses Abstrahlen des in der Leuchtflächeneinrichtung weitergeleiteten Lichtes von der Lichtaustrittsfläche ausgebildet ist.

3. Leuchtenvorrichtung nach einem der vorherigen Ansprüche, **dadurch gekennzeichnet, dass** die Leuchtflächeneinrichtung (4) in ihrem Inneren eine Anordnung optisch wirksamer Störstellen aufweist.

4. Leuchtenvorrichtung nach einem der vorherigen Ansprüche, **dadurch gekennzeichnet, dass** auf einer zu der Lichtaustrittsfläche rückseitigen Fläche der Leuchtflächeneinrichtung (17) und bevorzugt auf mindestens den randseitigen Flächen der Leuchtflächeneinrichtung (7) ohne eine benachbart dazu angeordnete Leuchteinheit (3) eine Reflektionsanordnung (14) so aufgebracht ist, dass ein in der Lichtflächeneinrichtung empfangenes und weitergeleitetes Licht nicht aus diesen Flächen der Leuchtflächeneinrichtung austritt, wobei die Reflektionsanordnung für ein Wirkungsspektrum des Hochfrequenz-Radarsensors durchlässig ist.

5. Leuchtenvorrichtung nach einem der vorherigen Ansprüche, **dadurch gekennzeichnet, dass** das Leuchtengehäuse (2) und insbesondere ein Abschnitt des Leuchtengehäuses zur Aufnahme der Leuchteinheit aus einem Metall, bevorzugt Aluminium, hergestellt ist.

6. Leuchtenvorrichtung nach einem der vorherigen Ansprüche, **dadurch gekennzeichnet, dass** die Leuchteinheit ausgebildet ist durch entlang mindestens einer randseitigen Fläche der Leuchtflächeneinrichtung (7) und einander kettenartig, insbesondere zusammen auf einer LED-Leiterplatte (11), angeordnete Leuchtmittel (15), die bevorzugt durch 20 bis 40 Leuchtdioden pro randseitiger Fläche der Leuchtflächeneinrichtung (7) ausgebildet sind, wobei die Leuchtmittel (15) bevorzugt auf zwei zueinander gegenüberliegenden randseitigen Flächen der Leuchtflächeneinrichtung (7) angeordnet sind.

7. Leuchtenvorrichtung nach einem der vorherigen Ansprüche, **dadurch gekennzeichnet, dass** die Leuchtflächeneinrichtung (4) aus Polycarbonat, Polymethylmethacrylat oder Glas hergestellt ist, eine, insbesondere konstante, Materialdicke im Bereich von 3 bis 7 mm, bevorzugt 4 bis 6 mm, aufweist und bevorzugt plattenförmig ausgebildet ist.

8. Leuchtenvorrichtung nach einem der vorherigen Ansprüche, **dadurch gekennzeichnet, dass** die Leuchtenvorrichtung ferner Mittel für eine, von einer Umgebungshelligkeit der Leuchtenvorrichtung abhängige Aktivierung der Leuchteinheit umfasst, denen insbesondere Kompensationsmittel zur Kompensation eines von der aktivierten Leuchteinheit erzeugten Umgebungshelligkeitsanteils zugeordnet sind.

9. Leuchtenvorrichtung nach einem der vorherigen Ansprüche, **dadurch gekennzeichnet, dass** die Leuchtenvorrichtung ferner ausgebildet ist zur Parametrisierung, mit einer drahtlos anbindbaren Fernbedienungsvorrichtung zur benutzergesteuerten Einstellung, mindestens eines Betriebsparameters der Leuchtenvorrichtung und/oder zur, bevorzugt drahtlosen, Übertragung mindestens eines Betriebsparameters der Leuchtenvorrichtung an eine benachbart vorgesehene oder vorzusehende weitere Leuchtenvorrichtung nach einem der vorherigen Ansprüche.

10. Leuchtenvorrichtungssystem mit mindestens einer Leuchtenvorrichtung nach einem der vorherigen Ansprüche und einer drahtlos anbindbaren Fernbedienungsvorrichtung zur benutzergesteuerten Einstellung mindestens eines Betriebsparameters der Leuchtenvorrichtung und/oder zum Veranlassen einer Übertragung des mindestens einen benutzereingestellten Betriebsparameters der Leuchtenvorrichtung an eine benachbart vorgesehene oder vorzusehende weitere Leuchtenvorrichtung nach einem der vorherigen Ansprüche.

11. Leuchtenvorrichtungssystem mit mindestens zwei der Leuchtenvorrichtungen nach einem der Ansprüche 1 bis 9, oder mit dem Leuchtenvorrichtungssystem von Anspruch 10 und einer weiteren Leuchtenvorrichtung nach einem der Ansprüche 1 bis 9.

## Claims

1. A sensor-controlled light device (1) with a light housing (2);
a lighting unit (3) held in the light housing (2), which in an activated operating state emits light and in a deactivated operating state does not emit light; a lighting area arrangement (4), held by the light housing (2), for receiving a light emitted by the lighting unit (3), transmitting a light in the lighting area arrangement and emitting a transmitted light from a light outlet area (5) of the lighting area arrangement;
a sensor (6) for detecting a movement and/or a presence of an object in a detection range (26) outside the light housing;
a control arrangement (16) for influencing the operating state of the lighting unit (3) as a function of a movement and/or presence of an object detected by the sensor (6) in the detection range (26),
wherein the lighting area arrangement (4) is configured to receive the light emitted by the lighting unit (3) onto at least one edge-side area of the lighting area arrangement (7),
the sensor is configured as a high-frequency radar sensor (6) and is arranged in the light housing (2) on a rear side opposed to the light outlet area (5) of the lighting area arrangement (4),
the lighting area arrangement (4) is configured so that the light outlet area (5) has a uniform brightness distribution in the activated operating state of the lighting unit (3),
**characterized in that**
the light outlet area (5) has a predefined, optically effective patterning (8), in order to bring about a scattering of a light transmitted in the lighting area arrangement and its exit from the light outlet area, and the patterning, preferably configured as a matrix dot form, is produced by at least a printing, gluing, painting, etching, engraving, sandblasting or a combination thereof,
wherein a surface coverage of optically effective pattern elements (9) of the patterning (8) is variable and preferably increases, preferably continuously, with an increasing distance to the lighting unit, and on a rear surface of the lighting area arrangement (17) to the light outlet area (5) and/or between the high-frequency radar sensor (6) and the rear-side face of the lighting area arrangement (17) a colour coat arrangement (10) is arranged, which is impervious to light but is permeable for an effective spectrum of the high-frequency radar sensor, with a uniformly pronounced, preferably white, colour, which is identical to a colour of the optically effective pattern elements (9) of the patterning (8), and the light outlet area (5) is configured with the patterning (8) so that in the deactivated operating state of the lighting unit for an observer spaced at a minimum distance of preferably at least 0.5 metres from the light outlet area, the optically effective pattern elements (9) of the patterning can not be detected.

2. The light device according to Claim 1, **characterized in that** the lighting area arrangement (4) is configured as an optical scattering arrangement for a diffuse emission of the light transmitted in the lighting area arrangement from the light outlet area.

3. The light device according to one of the preceding claims, **characterized in that** the lighting area arrangement (4) has in its interior an arrangement of optically effective interference sites.

4. The light device according to one of the preceding claims, **characterized in that** on a rear-side face, to the light outlet area, of the lighting area arrangement (17) and preferably on at least the edge-side faces of the lighting area arrangement (7) without a lighting unit (3) arranged adjacent thereto, a reflection arrangement (14) is applied so that a light received and transmitted in the light area arrangement does not emerge from these areas of the lighting area arrangement, wherein the reflection arrangement is permeable for an effective spectrum of the high-frequency radar sensor.

5. The light device according to one of the preceding claims, **characterized in that** the light housing (2) and in particular a portion of the light housing for holding the lighting unit is produced from a metal, preferably aluminium.

6. The light device according to one of the preceding claims, **characterized in that** the lighting unit is configured by lighting means (15), arranged along at least one edge-side face of the lighting area arrangement (7) and in a chain-like manner to one another, in particular together on an LED printed circuit board (11), which lighting means are preferably formed by 20 to 40 light-emitting diodes per edge-side face of the lighting area arrangement (7), wherein the lighting means (15) are preferably arranged on two edge-side faces of the lighting area arrangement (7) lying opposite to one another.

7. The light device according to one of the preceding claims, **characterized in that** the lighting area arrangement (4) is produced from polycarbonate, polymethyl methacrylate or glass, has an in particular constant material thickness in the range of 3 to 7 mm, preferably 4 to 6 mm, and is preferably configured so as to be plate-shaped.

8. The light device according to one of the preceding claims, **characterized in that** the light device further comprises means for an activation of the lighting unit dependent on an ambient brightness of the light device, associated with which means are in particular compensation means for the compensation of an ambient brightness portion generated by the activated lighting unit.

9. The light device according to one of the preceding claims, **characterized in that** the light device is further configured for parametrisation, with a wirelessly connectable remote control device for user-controlled adjustment, of at least one operating parameter of the light device and/or for the preferably wireless transmission of at least one operating parameter of the light device to a further light device, provided or to be provided adjacently, according to one of the preceding claims.

10. A light device system with at least one light device according to one of the preceding claims and with a wirelessly connectable remote control device for user-controlled adjustment of at least one operating parameter of the light device and/or for bringing about a transmission of the at least one user-adjusted operating parameter of the light device to a further light device provided or to be provided adjacently, according to one of the preceding claims.

11. The light device system with at least two of the light devices according to one of Claims 1 to 9, or with the light device system of Claim 10 and with a further light device according to one of Claims 1 to 9.

## Revendications

1. Dispositif d'éclairage (1) commandé par détecteur, comprenant
un boîtier de luminaire (2) ;
une unité d'éclairage (3) logée dans le boîtier de luminaire (2), laquelle rayonne de la lumière dans un état opérationnel activé et ne rayonne pas de lumière dans un état opérationnel désactivé ;
un appareil à surface lumineuse (4) accueilli par le boîtier de luminaire (2) destiné à recevoir une lumière rayonnée par l'unité d'éclairage (3), transmettre une lumière reçue dans l'appareil à surface lumineuse et rayonner une lumière transmise depuis une surface de sortie de lumière (5) de l'appareil à surface lumineuse ;
un capteur (6) destiné à détecter un mouvement et/ou une présence d'un objet dans une zone de détection (26) en-dehors du boîtier de luminaire ;
un appareil de commande (16) destiné à influencer l'état opérationnel de l'unité d'éclairage (3) en fonction d'un mouvement et/ou de la présence d'un objet détecté par le capteur (6) dans la zone de détection (26),
l'appareil à surface lumineuse (4) étant configuré pour recevoir la lumière rayonnée par l'unité d'éclairage (3) sur au moins une surface côté bord de l'appareil à surface lumineuse (7),
le capteur étant réalisé sous la forme d'un capteur radar à haute fréquence (6) et étant disposé dans le boîtier de luminaire (2) sur un côté arrière à l'opposé de la surface de sortie de lumière (5) de l'appareil à surface lumineuse (4),
l'appareil à surface lumineuse (4) étant configuré de telle sorte que la surface de sortie de lumière (5) possède une distribution de luminosité homogène dans l'état opérationnel activé de l'unité d'éclairage (3),
**caractérisé en ce**
**que** la surface de sortie de lumière (5) possède une formation en motif (8) prédéfinie optiquement active afin de produire une diffusion d'une lumière transmise dans l'appareil à surface lumineuse et sa sortie hors de la surface de sortie de lumière, et le motif, de préférence réalisé sous la forme de points de trame, est produit par au moins une impression, un collage, un vernissage, une gravure chimique, une gravure, un sablage ou une combinaison de ces opérations,
un degré de couverture de la surface par des éléments de motif (9) optiquement actifs de la formation en motif (8) étant variable et augmentant, de préférence en continu, à mesure que l'écart de l'unité d'éclairage augmente et un arrangement de couches colorées (10), lesquelles sont opaques à la lumière mais transparentes pour un spectre d'activité du capteur radar à haute fréquence, avec une couleur uniforme expressive, de préférence blanche, étant disposé sur une surface de l'appareil à surface lumineuse (17) du côté arrière par rapport à la surface de sortie de la lumière (5) et/ou entre le capteur radar à haute fréquence (6) et la surface côté arrière de l'appareil à surface lumineuse (17), lequel est identique à une couleur des éléments de motif (9) optiquement actifs de la formation en motif (8), et la surface de sortie de la lumière (5) avec la formation en motif (8) étant configurée de telle sorte que dans l'état opérationnel désactivé de l'unité d'éclairage, les éléments de motif (9) optiquement actifs de la formation en motif ne sont pas reconnaissables pour un observateur se trouvant à une distance minimale, de préférence d'au moins 0,5 mètre, de la surface de sortie de la lumière.

2. Dispositif d'éclairage selon la revendication 1, **caractérisé en ce que** l'appareil à surface lumineuse (4) est réalisé sous la forme d'un appareil de diffusion pour un rayonnement diffus, par la surface de sortie de la lumière, de la lumière transmise dans l'appareil à surface lumineuse.

3. Dispositif d'éclairage selon l'une des revendications précédentes, **caractérisé en ce que** l'appareil à surface lumineuse (4) possède à l'intérieur de celui-ci un arrangement d'imperfections optiquement actives.

4. Dispositif d'éclairage selon l'une des revendications précédentes, **caractérisé en ce qu'**un arrangement de réflexion (14) est appliqué sur une surface de l'appareil à surface lumineuse (17) du côté arrière par rapport à la surface de sortie de lumière et de préférence sur au moins les surfaces côté bord de l'appareil à surface lumineuse (7) sans présence d'une unité d'éclairage (3) voisine à celui-ci de telle sorte qu'une lumière reçue dans l'appareil à surface lumineuse et transmise ne sorte pas par ces surfaces de l'appareil à surface lumineuse, l'arrangement de réflexion étant transparent pour un spectre d'activité du capteur radar à haute fréquence.

5. Dispositif d'éclairage selon l'une des revendications précédentes, **caractérisé en ce que** le boîtier de luminaire (2), et notamment une portion du boîtier de luminaire destinée à accueillir l'unité d'éclairage, est fabriqué en un métal, de préférence de l'aluminium.

6. Dispositif d'éclairage selon l'une des revendications précédentes, **caractérisé en ce que** l'unité d'éclairage est configurée par des moyens lumineux (15) disposés le long d'au moins une surface côté bord de l'appareil à surface lumineuse (7) et mutuellement en chapelet, notamment ensemble sur un circuit imprimé à LED (11), lesquels sont de préférence formés par 20 à 40 diodes électroluminescentes par surface côté bord de l'appareil à surface lumineuse (7), les moyens lumineux (15) étant disposés de préférence sur deux surfaces côté bord mutuellement opposées de l'appareil à surface lumineuse (7).

7. Dispositif d'éclairage selon l'une des revendications précédentes, **caractérisé en ce que** l'appareil à surface lumineuse (4) est fabriqué en polycarbonate, en polyméthacrylate de méthyle ou en verre, possède une épaisseur de matière de préférence constante dans la plage de 3 à 7 mm, de préférence de 4 à 6 mm et présente de préférence une configuration en forme de plaque.

8. Dispositif d'éclairage selon l'une des revendications précédentes, **caractérisé en ce que** le dispositif d'éclairage comprend en outre des moyens pour une activation de l'unité d'éclairage dépendante d'une luminosité ambiante du dispositif d'éclairage, auxquels sont notamment associés des moyens de compensation destinés à compenser une part de luminosité ambiante produite par l'unité d'éclairage activée.

9. Dispositif d'éclairage selon l'une des revendications précédentes, **caractérisé en ce que** le dispositif d'éclairage est en outre configuré pour le paramétrage, avec un dispositif de commande à distance pouvant être connecté sans fil servant à un réglage commandé par l'utilisateur, d'au moins un paramètre de fonctionnement du dispositif d'éclairage et/ou pour la transmission, de préférence sans fil, d'au moins un paramètre de fonctionnement du dispositif d'éclairage à un dispositif d'éclairage voisin supplémentaire selon l'une des revendications précédentes, prévu ou à prévoir.

10. Système de dispositif d'éclairage comprenant au moins un dispositif d'éclairage selon l'une des revendications précédentes et un dispositif de commande à distance pouvant être connecté sans fil servant à un réglage commandé par l'utilisateur d'au moins un paramètre de fonctionnement du dispositif d'éclairage et/ou à initier une transmission de l'au moins un paramètre de fonctionnement du dispositif d'éclairage réglé par l'utilisateur à un dispositif d'éclairage voisin supplémentaire selon l'une des revendications précédentes, prévu ou à prévoir.

11. Système de dispositif d'éclairage comprenant au moins deux des dispositifs d'éclairage selon l'une des revendications 1 à 9 ou comprenant le système de dispositif d'éclairage selon la revendication 10 et un dispositif d'éclairage supplémentaire selon l'une des revendications 1 à 9.
